# EUROPEAN PATENT SPECIFICATION

(11) **EP 2 837 844 B1**
(45) Date of publication and mention of the grant of the patent: **01.03.2017**
(21) Application number: 14179751.4
(22) Date of filing: 04.08.2014
(51) Int. Cl.: F16D 7/02, F16D 1/08, F16D 9/06

(54) **Shear valve and torque limiter**
Scherventil und Drehmomentbegrenzer
Vanne à cisaillement et limiteur de couple

(30) Priority: 05.08.2013 JP 2013162591; 12.05.2014 JP 2014098377
(43) Date of publication of application: 18.02.2015
(73) Proprietor: JTEKT Corporation, Osaka-shi Osaka 542-8502 (JP)
(72) Inventor: Toshima, Yoshitsugu, Osaka-shi, Osaka 542-8502 (JP); Kawata, Michio, Osaka-shi, Osaka 542-8502 (JP)
(74) Representative: Winter, Brandl, Fürniss, Hübner, Röss, Kaiser, Polte - Partnerschaft mbB

(56) References cited:
- EP-A1- 2 287 485
- DE-A1- 3 545 651
- DE-A1- 4 112 484
- JP-U- H0 637 609
- US-A- 4 705 421
- US-A- 4 752 275

## Description

### BACKGROUND OF THE INVENTION

### 1. Field of the Invention

The invention relates to a shear valve and a torque limiter.

### 2. Description of the Related Art

Document US 4752275 discloses a shear valve having a passage that is closed at the one end side in the axial direction by the sheared portion and that is open at the other end side in the axial direction, the passage extending along the axial direction. An example of a conventional shear valve is described in Japanese Patent Application Publication No. 2010-53929. The shear valve is used in a torque limiter. Specifically, oil is supplied into a hydraulic pressure expansion chamber of the torque limiter, and then the pressure in the hydraulic pressure expansion chamber is maintained by the shear valve. The shear valve is a single-piece member. The shear valve has a head portion and a passage. One end of the passage is closed by the head portion, and the other end of the passage communicates with the hydraulic pressure expansion chamber.

When an excessively high load is applied to the torque limiter, the head portion of the shear valve is sheared and the oil in the hydraulic pressure expansion chamber is discharged from the sheared portion through the passage. Thus, the torque limiter interrupts transmission of torque.

With the conventional shear valve, if an excessively high load is applied to the torque limiter and the shear valve is sheared, it is necessary to replace the sheared shear valve, which is a single-piece member, with a new shear valve, which is a single-piece member. If the shear valve is replaced with a new shear valve every time the shear valve is sheared as described above, the running cost increases.

### SUMMARY OF THE INVENTION

One object of the invention is to provide a shear valve and a torque limiter that are configured to reduce the running cost for replacement of sheared shear valves with new shear valves.

An aspect of the invention relates to a shear valve including: a pin portion; and a tubular portion detachably fitted onto the pin portion. The pin portion has: a sheared portion that is allowed to be sheared from the other portion of the pin portion, and that is a portion of the pin portion, the portion being located at one end side in an axial direction of the pin portion, and a passage that is closed at the one end side in the axial direction by the sheared portion and that is open at the other end side in the axial direction, the passage extending along the axial direction.

### BRIEF DESCRIPTION OF THE DRAWINGS

The foregoing and further features and advantages of the invention will become apparent from the following description of example embodiments with reference to the accompanying drawings, wherein like numerals are used to represent like elements and wherein:
FIG. 1 is a schematic sectional view of a torque limiter according to a first embodiment of the invention, the sectional view being taken along the axial direction of the torque limiter;
FIG. 2 is an enlarged sectional view of the shear valve and its surroundings in FIG. 1;
FIG. 3 is a partial sectional view of the shear valve;
FIG. 4 is an exploded view of the shear valve;
FIG. 5 is a view illustrating a shear valve according to a second embodiment of the invention and corresponding to FIG. 3;
FIG. 6 is a partial sectional view of a pin portion of the shear valve in the second embodiment; and
FIG. 7 is a partial sectional view of a tubular portion of the shear valve in the second embodiment.

### DETAILED DESCRIPTION OF EMBODIMENTS

Hereinafter, example embodiments of the invention will be described in detail with reference to the accompanying drawings.

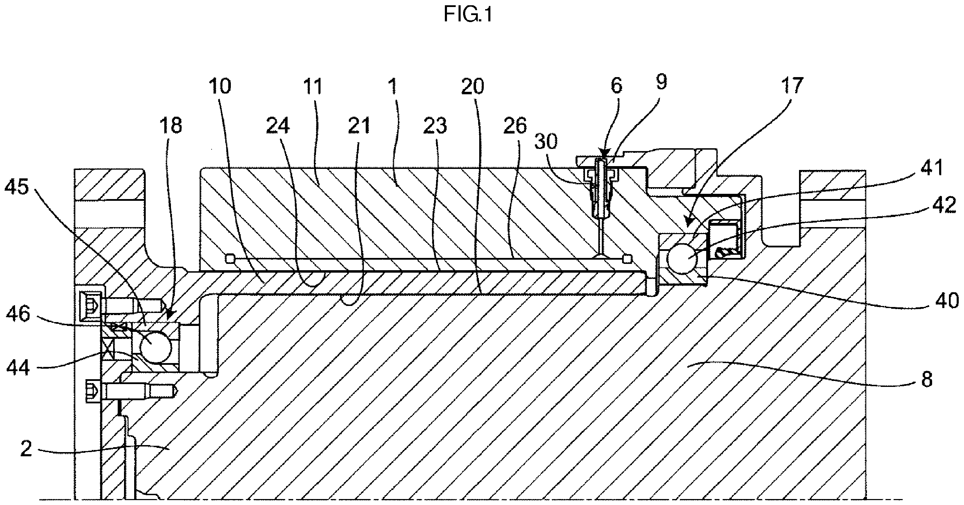

FIG. 1 is a schematic sectional view of a torque limiter according to a first embodiment of the invention, the sectional view being taken along the axial direction of the torque limiter. As illustrated in FIG. 1, the torque limiter includes a tubular member 1, which may function as a first member, a shaft member 2, which may function as a second member, four shear valves 6, a first ball bearing 17, and a second ball bearing 18.

The tubular member 1 includes a first tubular member 10 and a second tubular member 11. The first tubular member 10 has a generally cylindrical inner peripheral face 21 that contacts an outer peripheral face 20 of the shaft member 2. Lubrication oil for preventing seizure is present between the outer peripheral face 20 of the shaft member 2 and the inner peripheral face 21 of the first tubular member 10. The second tubular member 11 has a generally cylindrical inner peripheral face 24 that contacts a generally cylindrical outer peripheral face 23 of the first tubular member 10. The second tubular member 11 has four shear valve fitting holes 30 and an annular hydraulic pressure expansion chamber 26.

The hydraulic pressure expansion chamber 26 extends generally in the axial direction of the shaft member 2 over a prescribed axial length along the inner peripheral face 24 of the second tubular member 11. The four shear valve fitting holes 30 are formed in the outer peripheral face of the second tubular member 11 so as to be located at equal intervals in the circumferential direction. The number of the shear valves 6 is the same as the number of the shear valve fitting holes 30. The shear valves 6 are screwed into the shear valve fitting holes 30.

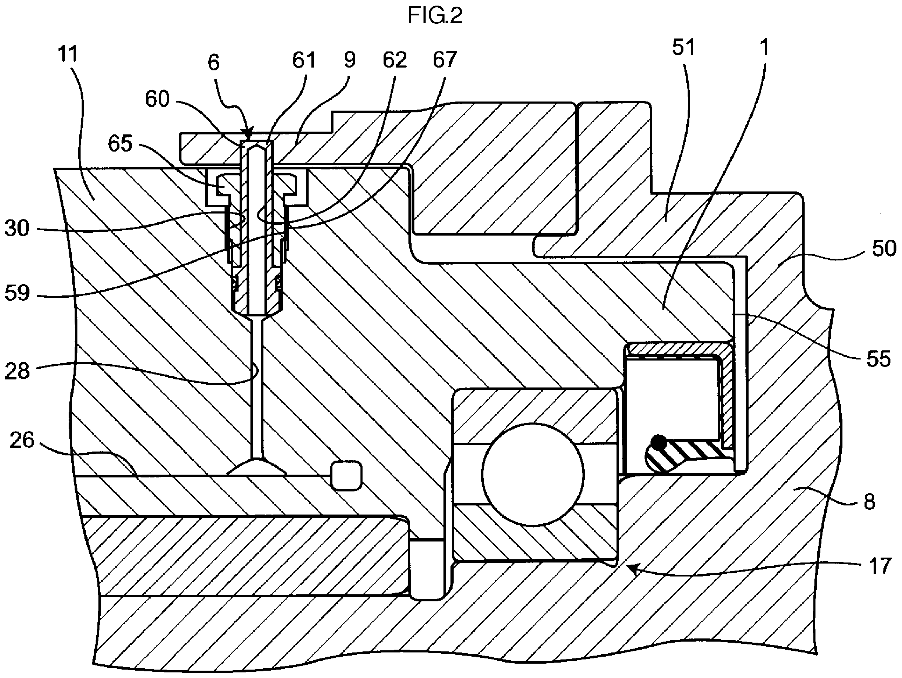

FIG. 2 is an enlarged sectional view of the shear valve 6 and its surroundings in FIG. 1. As illustrated in FIG. 2, the second tubular member 11 has an oil drain hole 28. One end portion of the oil drain hole 28, which is a radially inner end portion of the oil drain hole 28, communicates with the hydraulic pressure expansion chamber 26, whereas the other end portion of the oil drain hole 28, which is a radially outer end portion of the oil drain hole 28, opens into the shear valve fitting hole 30.

A passage 62 is formed in each of the shear valves 6. The passage 62 extends in the radial direction of the shaft member 2 when the shear valve 6 has been fixed in the shear valve fitting hole 30.

A radially outer end portion of the shear valve 6 constitutes a portion 61 to be sheared (hereinafter, referred to as "sheared portion 61). When the shear valve 6 is fitted in the shear valve fitting hole 30, the sheared portion 61 projects radially outward from the outer peripheral face of the second tubular member 11.

When the shear valve 6 has been fixed in the shear valve fitting hole 30, one end portion of the passage 62, which is a radially inner end portion of the passage 62, communicates with the other end portion of the oil drain hole 28. When the shear valve 6 has been fixed in the shear valve fitting hole 30, the one end portion of the passage 62 communicates with one axial end portion of the hydraulic pressure expansion chamber 26 via the oil drain hole 28. When the shear valve 6 has been fixed in the shear valve fitting hole 30, the other end portion of the passage 62, which is a radially outer end portion of the passage 62, extends up to the sheared portion 61. When the shear valve 6 has been fixed in the shear valve fitting hole 30, the other end portion of the passage 62 projects radially outward from the outer peripheral face of the second tubular member 11. The other end portion of the passage 62 is closed by the sheared portion 61.

As illustrated in FIG. 1 and FIG. 2, the shaft member 2 has a main body portion 8 having the generally cylindrical outer peripheral face 20, and a shearing portion 9. The shearing portion 9 is connected to the main body portion 8. As illustrated in FIG. 2, the main body portion 8 has a radially-extending portion 50 and an axially-extending portion 51. The radially-extending portion 50 is axially opposed to one axial end face 55 of the tubular member 1. The radially-extending portion 50 extends in the radial direction. The axially-extending portion 51 is connected to the radially-extending portion 50. The axially-extending portion 51 extends along the outer peripheral face of the tubular member 1 in the axial direction.

The shearing portion 9 is fixed to the axially-extending portion 51 of the main body portion 8 with a fastening member such as a bolt. The shearing portion 9 has a portion located radially outward of the outer peripheral face of the second tubular member 11. The shearing portion 9 is located on a circle, which extends along the circumferential direction of the shaft member 2 and on which the sheared portion 61 of the shear valve 6 is located.

As illustrated in FIG. 1, the first ball bearing 17 includes an inner ring 40, an outer ring 41 and a plurality of balls 42. The inner ring 40 is fixedly fitted to the outer peripheral face of the shaft member 2. The outer ring 41 is fixedly fitted to the inner peripheral face of the second tubular member 11. The balls 42 are disposed between a raceway surface of the inner ring 40 and a raceway surface of the outer ring 41. The second ball bearing 18 includes an inner ring 44, an outer ring 45 and a plurality of balls 46. The inner ring 44 is fixedly fitted to the outer peripheral face of the shaft member 2. The outer ring 45 is fixedly fitted to the inner peripheral face of the first tubular member 10. The balls 46 are disposed between a raceway surface of the inner ring 44 and a raceway surface of the outer ring 45.

The first ball bearing 17 and the second ball bearing 18 support the shaft member 2 such that the shaft member is rotatable relative to the tubular member 1.

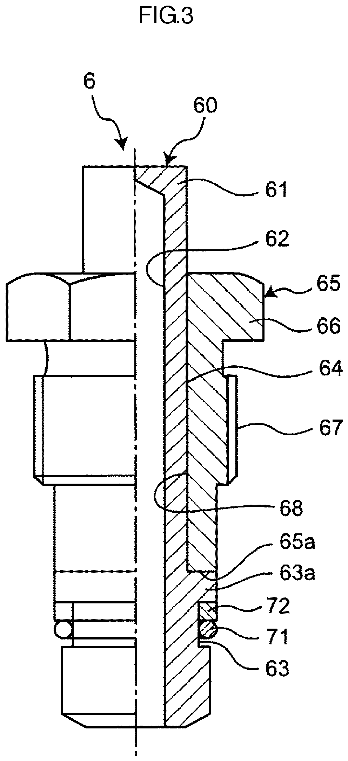

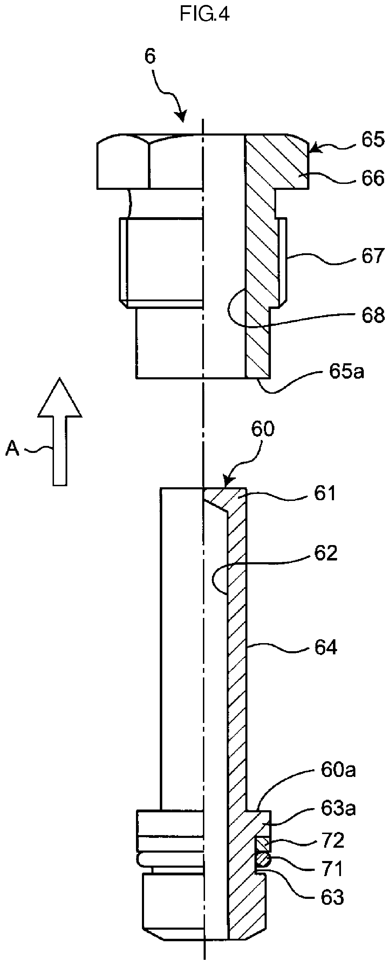

FIG. 3 is a partial sectional view of the shear valve 6. FIG. 4 is an exploded view of the shear valve 6. As illustrated in FIG. 3, the shear valve 6 has a pin portion 60 and a tubular portion 65. As illustrated in FIG. 4, the tubular portion 65 is detachably fitted on the pin portion 60.

As illustrated in FIG. 3, the pin portion 60 has the sheared portion 61, which is one axial end portion (upper end portion in FIG. 3) of the pin portion 60. The sheared portion 61 is configured to be sheared by the shearing portion 9 of the shaft member 2 (see FIG. 1).

The pin portion 60 has the passage 62. The passage 62 extends along the axial direction of the pin portion 60. One axial end side of the passage 62 is closed by the sheared portion 61. On the other hand, the other axial end side (the lower side in FIG. 3) of the passage 62 is open.

The pin portion 60 has an annular fitting groove 63 that extends along the circumferential direction and that is located in the other axial end side portion of the pin portion 60. A sealing member 71 and a backup ring 72 are fitted in the fitting groove 63 such that the sealing member 71 and the backup ring 72 are adjacent to each other in the axial direction. The sealing member 71 is located closer to the other axial end of the pin portion 60 than the backup ring 72 is.

The tubular portion 65 has a head portion 66 and a thread groove 67. The head portion 66 is located at one axial end side portion (upper side in FIG. 3) of the tubular portion 65. The thread groove 67 is located closer to the other axial end of the tubular portion 65 than the head portion 66 is. The head portion 66 is, for example, a bolt head having a hexagonal shape in a planar view. Note that the head portion may have any known shape other than a hexagonal shape in a planar view, as long as the head portion is fastened by a tool. As illustrated in FIG. 2, the thread groove 67 engages with a thread groove 59 formed in an inner face that defines the shear valve fitting hole 30.

Returning again to FIG. 3, an opposed portion 64 that is opposed to the tubular portion 65, an opposed portion 64 being included in the outer peripheral face of the pin portion 60, is a smooth surface. An opposed portion 68 that faces the pin portion 60, the opposed portion 68 being included in the inner peripheral face of the tubular portion 65, is also a smooth surface. The smooth surface is a flat and smooth surface that does not have any thread grooves or the like. The opposed portion 64 of the pin portion 60 and the opposed portion 68 of the tubular portion 65 are located closer to the axial one ends of the pin portion 60 and the tubular portion 65 (located closer to the sheared portion 61 in the axial direction of the pin portion 60) than the fitting groove 63 is.

The pin portion 60 and the tubular portion 65 are detachable from each other along their axial direction. As illustrated in FIG. 4, when the pin portion 60 is moved relative to the tubular portion 65 in the direction indicated by an arrow A to fit the pin portion 60 into the tubular portion 65, an end face 65a of the tubular portion 65 is brought into contact with an axial end face 60a of a flange 63a of the pin portion 60, the flange 63a having the fitting groove 63. After the end face 65a of the tubular portion 65 contacts the axial end face 60a of the flange 63a, the tubular portion 65 is no longer moved in the axial direction.

Next, assembly of the torque limiter will be described.

As illustrated in FIG. 2, first, the tubular member 1 is fitted on the shaft member 2 to fix the tubular member 1 at a prescribed position of the shaft member 2. Next, the tubular portion 65 of the shear valve 6 is slightly loosely screwed into the shear valve fitting hole 30. Then, a prescribed amount of oil is supplied into the hydraulic pressure expansion chamber 26 through an oil sealing passage (not illustrated) connected to the shear valve fitting hole 30, so that the oil is sealed in the hydraulic pressure expansion chamber 26. In this way, the tubular member 1 is frictionally engaged with the shaft member 2.

Then, the tubular portion 65 of the shear valve 6 fastened to the shear valve fitting hole 30 by screwing, so that the shear valve 6 is reliably fixed in the shear valve fitting hole 30. At this time, the sheared portion 61 of the pin portion 60 of the shear valve 6 is located on a circle, which extends along the circumferential direction of the shaft member 2 and on which the shearing portion 9 is located. In this way, the assembly of the torque limiter is completed.

In this state, an end portion of the pin portion 60 of the shear valve 6, the end portion being on the hydraulic pressure expansion chamber 26 side, receives hydraulic pressure. However, the axial end face 60a of the flange 63a of the pin portion 60 is in contact with the end face 65a of the tubular portion 65, and hence the pin portion 60 is not allowed to come out of the shear valve fitting hole 30.

The opposed portion 64 of the pin portion 60 and the opposed portion 68 of the tubular portion 65 are located closer to the one axial ends of the pin portion 60 and the tubular portion 65 (located farther from the hydraulic pressure expansion chamber 26) than the fitting groove 63 is. With this configuration, even if there is a clearance between the opposed portion 64 of the pin portion 60 and the opposed portion 68 of the tubular portion 65, the clearance is located on the opposite side of the sealing member 71, which is fitted in the fitting groove 63, from the hydraulic pressure expansion chamber 26. Thus, the oil in the hydraulic pressure expansion chamber 26 is prevented from leaking through the clearance.

Next, the operation of the torque limiter will be described.

When a load lower than a prescribed value (a load within a range in which torque is transmitted) is applied to the shaft member 2 or the tubular member 1, the diameter of the inner peripheral face 21 of the first tubular member 10 is reduced by the oil, which is used to expand the inner peripheral face 21 of the first tubular member 10 radially inward and which is supplied into the hydraulic pressure expansion chamber 26. Thus, the inner peripheral face 21 is pressed against the outer peripheral face 20 of the shaft member 2, so that the tubular member 1 and the shaft member 2 are frictionally connected to each other to transmit torque between the tubular member 1 and the shaft member 2.

On the other hand, if a load equal to or higher than the prescribed value (a load higher than the upper limit of the range in which torque is transmitted) is applied to the tubular member 1 or the shaft member 2 and thus the outer peripheral face 20 of the shaft member 2 rotates relative to the inner peripheral face 21 of the first tubular member 10, the shearing portion 9 shears the sheared portion 61 of the shear valve 6. Thus, the oil is discharged from the hydraulic pressure expansion chamber 26 to the outside through the passage 62 of the shear valve 6.

As a result, pressing force is no longer applied from the inner peripheral face 21 of the first tubular member 10 to the outer peripheral face 20 of the shaft member 2, so that frictional connection between the tubular member 1 and the shaft member 2 is cancelled to interrupt transmission of the torque. In this way, if an excessive load is applied to the tubular member 1 or the shaft member 2, transmission of the torque is interrupted to protect the expensive apparatus connected to the torque limiter.

When the shear valve 6 from which the sheared portion 61 has been sheared is replaced with a new shear valve 6, the tubular portion 65 screwed in the shear valve fitting hole 30 is removed from the shear valve fitting hole 30. Then, the pin portion 60 that is in contact with the wall face of the shear valve fitting hole 30 via the sealing member 71 is pulled out of the shear valve fitting hole 30.

At this time, as illustrated in FIG. 3, the opposed portions 64, 68 of the pin portion 60 and the tubular portion 65, which are opposed to each other, are smooth surfaces, and the pin portion 60 and the tubular portion 65 are not screwed to each other at the opposed portions 64, 68. With this configuration, the pin portion 60 does not rotate together with the tubular portion 65. Thus, the sealing member 71 and the backup ring 72 do not rotate together with the tubular portion 65. Thus, even if there are burrs or the like on the wall face of the shear valve fitting hole 30, the sealing member 71 and the backup ring 72 do not contact the wall face of the shear valve fitting hole 30. Thus, the sealing member 71 and the backup ring 72 are prevented from being damaged.

Then, only the sheared pin portion 60 is replaced with a new pin portion 60, and the tubular portion 65 is not replaced with a new one. The new pin portion 60 is fitted into the original tubular portion 65 from the outside, and then the tubular portion 65 is screwed into the shear valve fitting hole 30 while the pin portion 60 is inserted into the shear valve fitting hole 30. In this manner, the new shear valve 6 is fitted into the shear valve fitting hole 30.

At this time, the opposed portions 64, 68 of the pin portion 60 and the tubular portion 65, which are opposed to each other, are smooth surfaces, and the pin portion 60 and the tubular portion 65 are not screwed to each other at the opposed portions 64, 68. With this configuration, the pin portion 60 does not rotate together with the tubular portion 65 when the tubular portion 65 is removed. Thus, the sealing member 71 and the backup ring 72 do not rotate together with the tubular portion 65. Thus, even if there are burrs or the like on the wall face of the shear valve fitting hole 30, the sealing member 71 and the backup ring 72 do not contact the wall face of the shear valve fitting hole 30. Thus, the sealing member 71 and the backup ring 72 are prevented from being damaged.

According to the shear valve 6 in the first embodiment, the pin portion 60 has the sheared portion 61 that closes the passage 62 and the pin portion 60 is detachably fitted into the tubular portion 65 from the outside. When the shear valve 6 is used in the torque limiter, an excessively high load is applied to the torque limiter and the sheared portion 61 of the pin portion 60 of the shear valve 6 is sheared. When the shared shear valve 6 is replaced with a new shear valve 6, only the pin portion 60 is replaced with a new pin portion 60 and the tubular portion 65 is continuously used as it is without being replaced with a new one. In this way, when the shear valve 6 is replaced with a new one, only the pin portion 60 needs to be replaced with a new pin portion 60. This makes it possible to reduce the running cost. Because the shear valve 6 is formed of the reusable tubular portion 65 and the replaceable pin portion 60, the running cost is suppressed.

Because the shear valve 6 is formed of the tubular portion 65 and the pin portion 60, which is a component different from the tubular portion 65, the stiffness of the pin portion 60 may be reduced irrespective of the tubular portion 65. Thus, the sheared portion 61 of the pin portion 60 is sheared more easily. The shear valve 6 is formed of the tubular portion 65 and the pin portion 60, which is a component different from the tubular portion 65, the stiffness of the tubular portion 65 may be reduced irrespective of the pin portion 60. Thus, when the shear valve 6 is fitted in the shear valve fitting hole 30 of the torque limiter, the tubular portion 65 is screwed into the shear valve fitting hole 30 by applying a large force to the tubular portion 65, so that the shear valve 6 is reliably fitted in the shear valve fitting hole 30. For example, the pin portion 60 may be made of brass and the tubular portion 65 may be made of S45C.

Because the torque limiter in the first embodiment has the shear valve 6, it is possible to reduce the running cost for the replacement of the shear valve 6, which is required after the actuation of the torque limiter.

Note that the invention is not limited to the first embodiment, and design changes may be made within the scope of the invention.

In the first embodiment, the thread groove 67 is formed in the outer peripheral face of the tubular portion 65. However, in the invention, a (projected or recessed) engagement portion may be formed on the outer peripheral face of the tubular portion 65, and the engagement portion may be engaged with a (projected or recessed) engaged portion that is formed on the wall face of the shear valve fitting hole.

In the first embodiment, the shear valves 6 are fitted to the outer peripheral face of the tubular member 1. However, in the invention, shear valve fitting holes may be formed in the axial end face of the tubular member 1, and the shear valves 6 may be fitted to the axial end face of the tubular member 1.

In the first embodiment, the opposed portion 64 of the pin portion 60 and the opposed portion 68 of the tubular portion 65 are smooth surfaces. However, in the invention, thread grooves may be formed in the opposed portion of the pin portion 60 and the opposed portion of the tubular portion 65 to engage the pin portion and the tubular portion with each other.

In the first embodiment, the tubular member 1 is formed of the first tubular member 10 and the second tubular member 11. The first tubular member 10 has the inner peripheral face 21 that comes in contact with the outer peripheral face 20 of the shaft member 2. The second tubular member 11 has the hydraulic pressure expansion chamber 26 in which the oil, which is used to expand the inner peripheral face 21 of the first tubular member 10 radially inward, is sealed. However, in the invention, the tubular member may be a single-piece tubular member having an inner peripheral face that comes in contact with the outer peripheral face of the shaft member 2 and a fluid pressure expansion chamber in which the oil, which is used to expand the inner peripheral face 21 of the first tubular member 10 radially inward, is sealed.

In the first embodiment, the lubrication oil to be applied on and disposed between the outer peripheral face 20 of the shaft member 2 and the inner peripheral face 21 of the tubular member 1 may be traction oil, or may be lubrication oil other than the traction oil, such as, paraffin-base mineral oil (turbine oil) or hindered ester.

In the first embodiment, the annular hydraulic pressure expansion chamber 26 functions as a fluid pressure expansion chamber, and the oil is the fluid that is supplied into the fluid pressure expansion chamber. However, in the invention, the fluid pressure expansion chamber need not have an annular shape. Further, in the invention, the fluid that is supplied into the fluid pressure expansion chamber may be any liquid other than oil.

In the first embodiment, four shear valves are disposed at equal intervals in the circumferential direction. However, in the invention, the number of the shear valves is not particularly limited as long as at least one shear valve is disposed. When a plurality of the shear valves is provided, the shear valves may be disposed at equal intervals in the circumferential direction or may be disposed at unequal intervals in the circumferential direction.

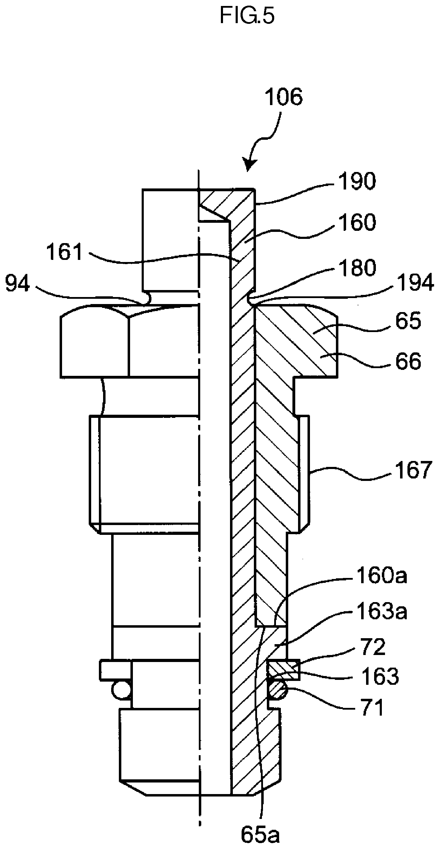

In the first embodiment, the tubular member 1 functions as the first member and the tubular member 1 has the hydraulic pressure expansion chamber 26. However, in the invention, the first member may be the shaft member 2 and the shaft member 2 may have a fluid pressure expansion chamber. In the invention, a configuration that facilitates shearing of the shear valve may be adopted, as illustrated in FIG. 5 to FIG. 7.

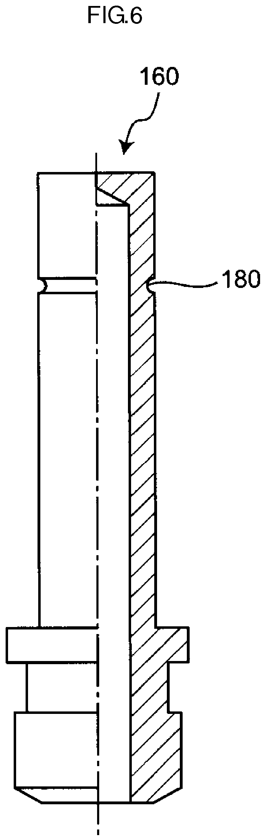

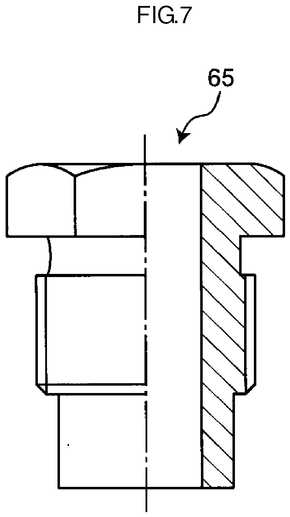

FIG. 5 is a view illustrating a shear valve 106 according to a second embodiment of the invention and corresponding to FIG. 3. FIG. 6 is a partial sectional view of a pin portion 160 of the shear valve 106 in the second embodiment. FIG. 7 is a partial sectional view of a tubular portion 65 of the shear valve 106 in the second embodiment. Note that, in the second embodiment, the same elements as those in the first embodiment will be denoted by the same reference symbols as those in the first embodiment, and description thereon will be omitted. Further, in the second embodiment, descriptions on the operation and advantageous effects and modified examples that are common to those of the first embodiment will be omitted, and only the configurations, operation and advantageous effects and modified examples that are different from those in the first embodiment will be described.

The shear valve 106 in the second embodiment is different from the shear valve 6 in the first embodiment only in that a portion 161 to be sheared (hereinafter, referred to as "sheared portion 161") of the pin portion 160 has an annular notch (groove) 180. Specifically, as illustrated in FIG. 5, the pin portion 160 has the sheared portion 161 located at one axial side portion of the pin portion 160, and has a flange 163a having a fitting groove 163 and located at the other axial side portion of the pin portion 160. The sheared portion 161 has the annular notch 180. The notch 180 is formed in the outer peripheral face of the pin portion 160 so as to extend precisely along the circumferential direction of the pin portion 160. In a contact state where an end face 65a of the tubular portion 65, the end face 65a being located on the opposite side of the tubular portion 65 from a head portion 66 in the axial direction, is in contact with an axial end face 160a of the flange 163a of the pin portion 160, the entirety of the notch 180 is located closer, in the axial direction, to the one axial end of the shear valve 106 (closer to the sheared portion 161) than the tubular portion 65 is. More specifically, as illustrated in FIG. 5, in the contact state, an axial end 194 of the notch 180, the axial end 194 being located on the tubular portion 65 side in the axial direction, is connected to an upper face 94 of the head portion 66 of the tubular portion 65. Although not described in detail, a reference numeral 167 in FIG. 5 denotes a thread groove of the tubular portion 65.

The shear valve according to the invention has a splittable configuration instead of a single-piece configuration, so that the running cost is reduced. However, the shear valve has a splittable configuration and thus it is necessary to fit the pin portion 160 into the tubular portion 65. In order to make it possible to fit the pin portion 160 into the tubular portion 65, the sheared portion 161 of the pin portion 160 needs to be formed into a rod shape. For example, if a projecting portion that extends perpendicularly to the axial direction is formed at a sheared portion of a pin so that the pin is easily sheared as in a known shear valve, it is not possible to fit the pin into a tubular portion. The inventor has found the fact that, if a sheared portion of a shear valve has a rod shape, the sheared portion is not sheared at the same time as the actuation of the torque limiter and the sheared portion is deformed into an elliptic shape and then sheared in some cases (note that, according to the invention, even if the pin portion does not have the notch, deformation of the sheared portion into a elliptic shape does not occur and the sheared portion is sheared instantaneously in most cases).

In contract to this, with the torque limiter according to the second embodiment, an outer peripheral face 190 of the pin portion 160 has the notch 180 that extends in the circumferential direction of the outer peripheral face 190 and that is located closer to the axial one end of the pin portion 160 than the tubular portion 65 is. Therefore, the strength of a portion of the pin portion, at which the notch 180 is present, is reduced. As a result, even if the sheared portion 161 of the pin portion 160 has a rod shape, shearing reliably and instantaneously starts from the notch 180 and the sheared portion 161 is sheared instantaneously. Thus, although the running cost is reduced, it is possible to reliably and instantaneously cause shearing at the same time as the actuation of the torque limiter, so that a high responsiveness of the shearing is achieved.

According to the second embodiment, the notch 180 is formed in the pin portion 160 of the shear valve 106. Therefore, as compared with the splittable shear valve 6 in the first embodiment in which no notch is formed, there are not any changes in the usage and work and there is almost no increase in the number of steps or hours to manufacture the torque limiter.

In the second embodiment, the notch 180 has an annular shape. However, in the invention, the notch need not be annular and may be present only in the phase of a portion of the outer peripheral face of the pin portion in the circumferential direction. In this case, the pin portion may have only one non-annular notch, or may have a plurality of notches that are located at the same position in the axial direction of the pin portion and that are located at intervals in the circumferential direction. In the invention, two or more notches may be formed at different positions in the axial direction.

In the contact state where the end face 65a of the tubular portion 65, the end face 65a being located on the opposite side of the tubular portion 65 from the head portion 66 in the axial direction, is in contact with the axial end face 160a of the flange 163a of the pin portion 160, the entirety of the notch 180 is located closer, in the axial direction, to the sheared portion 161 than the tubular portion 65 is. In the contact state, the axial end 194 of the notch 180, the axial end 194 being located on the tubular portion 65 side in the axial direction, is connected to the upper face 94 of the head portion 66 of the tubular portion 65. However, in the invention, in the contact state where the end face of the tubular portion, the end face being located on the opposite side of the tubular portion from the head portion in the axial direction, is in contact with the axial end face of the flange of the pin portion, the entirety of the notch may be located in the sheared portion so as to be apart from the head portion in the axial direction. In the invention, in the contact state, only part of the notch may be located closer, in the axial direction, to the sheared portion than the tubular portion is, or the notch may have a portion that overlaps with the tubular portion in the axial direction of the tubular portion.

In the second embodiment, the notch 180 extends precisely along the circumferential direction of the outer peripheral face of the pin portion 160. However, in the invention, the notch may extend in an extending direction having an extending component in the circumferential direction of the outer peripheral face of the pin portion, or the notch may extend in an extending direction having an extending component of the axial direction of the outer peripheral face of the pin portion.

As described in the first embodiment, the pin portion need not have the notch in the invention. Needless to say that a new embodiment may be formulated by combining two or more configurations among the configurations described in all the embodiments and modified examples.

With the shear valve according to the invention, the pin portion has the sheared portion that closes the passage, and the pin portion is detachable from the tubular portion. Thus, when the shear valve is replaced, only the pin portion needs to be replaced with a new one. This makes it possible to reduce the running cost.

Because the torque limiter according to the invention has the shear valve, it is possible to reduce the running cost for the replacement of the shear valves, which is required after the actuation of the torque limiter.

## Claims

1. A shear valve (6) comprising:
a pin portion (60); and
a tubular portion (65) detachably fitted onto the pin portion,
the pin portion having
a sheared portion (61) that is allowed to be sheared from the other portion of the pin portion, and that is a portion of the pin portion, the portion being located at one end side in an axial direction of the pin portion, and
a passage (62) that is closed at the one end side in the axial direction by the sheared portion and that is open at the other end side in the axial direction, the passage extending along the axial direction.

2. The shear valve according to claim 1, wherein:
an outer peripheral face of the tubular portion has a thread groove (67),
a first opposed portion (64) in an outer peripheral face of the pin portion, the first opposed portion being opposed to the tubular portion, is a smooth surface, and
a second opposed portion (68) in an inner peripheral face of the tubular portion, the second opposed portion being opposed to the pin portion, is a smooth surface.

3. The shear valve according to claim 1 or 2, wherein:
the pin portion has a fitting groove (63) into which a sealing member (71) is fitted, the fitting groove being located at the other end side in the axial direction; and
the first opposed portion in the outer peripheral face of the pin portion, the first opposed portion being opposed to the tubular portion, and the second opposed portion in the inner peripheral face of the tubular portion, the second opposed portion being opposed to the pin portion, are located closer to the one end side in the axial direction than the fitting groove is.

4. The shear valve according to any one of claims 1 to 3, wherein an outer peripheral face of the pin portion (160) has a notch (180) that extends in a circumferential direction of
the outer peripheral face of the pin portion, the notch being located closer to the one end side in the axial direction than the tubular portion is.

5. A torque limiter comprising:
shaft member (2) ;
a tubular member (1) rotatably fitted onto the shaft member; and
the shear valve (6) according to any one of claims 1 to 4, wherein
a first member that is one of the tubular member and the shaft member has
a fluid pressure expansion chamber (26) for pressing a peripheral face of the first
member against a peripheral face of a second member that is the other one of the tubular member and the shaft member, and
a shear valve fitting hole (30) connected to the fluid pressure expansion chamber,
the sheared portion (61) of the shear valve projects from the first member when the shear
valve has been fitted in the shear valve fitting hole, and
the second member has a shearing portion (9) that is located on a circle, which extends
along a circumferential direction of the second member and on which the sheared portion of the shear valve is located, when the shear valve has been fitted in the shear valve fitting hole.

## Patentansprüche

1. Scherventil (6P) mit:
einem Stiftabschnitt (60); und
einem auf den Stiftabschnitt abnehmbar aufgesetzten rohrförmigen Abschnitt (65),
wobei der Stiftabschnitt
einen Scherabschnitt (61), der von dem anderen Abschnitt des Stiftabschnitts Scherbar und ein Abschnitt des Stiftabschnitts ist, wobei dieser Abschnitt in einer axialen Richtung des Stiftabschnitts an einer Endseite angeordnet ist, und
einen Durchgang (62) aufweist, der in der axialen Richtung an der einen Endseite in der Nähe des Scherabschnitts geschlossen und in der axialen Richtung an der anderen Endseite geöffnet ist, wobei sich der Durchgang entlang der axialen Richtung erstreckt.

2. Scherventil nach Anspruch 1, wobei:
eine Außenumfangsfläche des rohrförmigen Abschnitts eine Gewindenut (67) hat,
ein erster entgegengesetzter Abschnitt (64) auf einer Außenumfangsfläche des Stiftabschnitts, wobei der erste entgegengesetzte Abschnitt dem rohrförmigen Abschnitt gegenüberliegt, eine glatte Oberfläche ist, und
ein zweiter entgegengesetzter Abschnitt (68) auf einer Innenumfangsfläche des rohrförmigen Abschnitts, wobei der zweite entgegengesetzte Abschnitt dem Stiftabschnitt gegenüberliegt, eine glatte Oberfläche ist.

3. Scherventil nach Anspruch 1 oder 2, wobei:
der Stiftabschnitt eine Einsatznut (63) hat, in die ein Dichtungselement (71) mit Passung eingepasst ist, wobei die Einsatznut in der axialen Richtung an der anderen Endseite angeordnet ist; und
der erste entgegengesetzte Abschnitt auf der Außenumfangsfläche des Stiftabschnitts, wobei der erste entgegengesetzte Abschnitt dem rohrförmigen Abschnitt gegenüberliegt, und der zweite entgegengesetzte Abschnitt in der Innenumfangsfläche des rohrförmigen Abschnitts, wobei der zweite entgegengesetzte Abschnitt dem Stiftabschnitt gegenüberliegt, in der axialen Richtung der einen Endseite näher angeordnet sind als die Einsatznut.

4. Scherventil nach einem der Ansprüche 1 bis 3, wobei eine Außenumfangsfläche des Stiftsabschnitts (160) eine Kerbe (180) hat, die sich in einer Umfangsrichtung der Außenumfangsfläche des Stiftabschnitts erstreckt, wobei die Kerbe in der axialen Richtung der einen Endseite näher angeordnet ist als der rohrförmige Abschnitt.

5. Drahmomentbegrenzer mit:
einem Wellenelement (2);
einem auf das Wellenelement drehbar aufgesetzten rohrförmigen Element (1); und
dem Scherventil (6) nach einem der Ansprüche 1 bis 4, wobei
ein erstes Element, das ein Element von dem rohrförmigen Element und dem Wellenelement ist,
einen Fluiddruck-Expansionskammer (26) zum Andrücken einer Umfangsfläche des ersten Elements an eine Umfangsfläche eines zweiten Elements, das das andere Element aus dem rohrförmigen Element und dem Wellenelement ist, und
ein mit dem Fluiddruck-Expansionskammer verbundenes Scherventil-Einsatzloch (30) hat,
der Scherabschnitt (61) des Scherventils aus dem ersten Element übersteht, wenn das Scherventil in das Scherventil-Einsatzloch mit Passung eingepasst worden ist, und
das zweite Element einen scherenden Abschnitt (9) hat, der auf einem Kreis angeordnet ist, welcher sich entlang einer Umfangsrichtung des zweiten Elements erstreckt und auf dem der Scherabschnitt des Scherventils angeordnet ist, wenn das Scherventil in das Scherventil-Einsatzloch mit Passung eingepasst worden ist.

## Revendications

1. Vanne à cisaillement (6) comprenant :
une partie de broche (60) ; et
une partie tubulaire (65) montée de manière détachable sur la partie de broche,
la partie de broche ayant :
une partie cisaillée (61) qui est autorisée à être cisaillée à partir de l'autre partie de la partie de broche, qui est une partie de la partie de broche, la partie étant positionnée au niveau d'un côté d'extrémité dans une direction axiale de la partie de broche, et
un passage (62) qui est fermé au niveau du un côté d'extrémité dans la direction axiale par la partie cisaillée et qui est ouvert au niveau de l'autre côté d'extrémité dans la direction axiale, le passage s'étendant le long de la direction axiale.

2. Vanne à cisaillement selon la revendication 1, dans laquelle :
une face périphérique externe de la partie tubulaire a une rainure de filetage (67),
une première partie opposée (64) dans une face périphérique externe de la partie de broche, la première partie opposée qui est opposée à la partie tubulaire, est une surface lisse, et
une seconde partie opposée (68) dans une face périphérique interne de la partie tubulaire, la seconde partie opposée qui est opposée à la partie de broche, est une surface lisse.

3. Vanne à cisaillement selon la revendication 1 ou 2, dans laquelle :
la partie de broche a une rainure de montage (63) dans laquelle une élément d'étanchéité (71) est monté, la rainure de montage étant positionnée au niveau de l'autre côté d'extrémité dans la direction axiale ; et
la première partie opposée dans la face périphérique externe de la partie de broche, la première partie opposée étant opposée à la partie tubulaire, et la seconde partie opposée dans la face périphérique interne de la partie tubulaire, la seconde partie opposée étant opposée à la partie de broche, sont positionnées plus à proximité du un côté d'extrémité dans la direction axiale que ne l'est la rainure de montage.

4. Vanne à cisaillement selon l'une quelconque des revendications 1 à 3, dans laquelle une face périphérique externe de la partie de broche (160) a une encoche (180) qui s'étend dans une direction circonférentielle de la face périphérique externe de la partie de broche, l'encoche étant positionnée plus à proximité du un côté d'extrémité dans la direction axiale que ne l'est la partie tubulaire.

5. Limiteur de couple comprenant :
un élément d'arbre (2) ;
un élément tubulaire (1) monté de manière rotative sur l'élément d'arbre ; et
la vanne à cisaillement (6) selon l'une quelconque des revendications 1 à 4, dans lequel un premier élément qui est l'un parmi l'élément tubulaire et l'élément d'arbre a une première chambre d'expansion de pression de fluide (26) pour comprimer une face périphérique du premier élément contre une face périphérique d'un second élément qui est l'autre parmi l'élément tubulaire et l'élément d'arbre, et
un trou de montage de vanne à cisaillement (30) raccordé à la chambre d'expansion de pression de fluide,
la partie cisaillée (61) de la vanne à cisaillement fait saillie du premier élément lorsque la vanne à cisaillement a été montée dans le trou de montage de vanne à cisaillement, et
le second élément a une partie de cisaillement (9) qui est positionnée sur un cercle, qui s'étend le long d'une direction circonférentielle du second élément et sur laquelle la partie cisaillée de la vanne à cisaillement est positionnée, lorsque la vanne à cisaillement a été montée dans le trou de montage de vanne à cisaillement.
